# EUROPEAN PATENT APPLICATION

(11) **EP 4 793 862 A1**
(43) Date of publication of application: **19.08.2026**
(21) Application number: 25159969.2
(22) Date of filing: 25.02.2025
(51) Int. Cl.: G06Q 30/02

(54) **METHOD AND SYSTEM FOR GENERATING ADVERTISING STRATEGY**

(30) Priority: 13.02.2025 KR 20250018528
(71) Applicant: Motov Co., Ltd., Incheon (KR)
(72) Inventor: Kim, Seong Hoon, SEJONG-SI (KR); Song, Chi Young, GWANGJU-SI (KR); Yoon, Jae Hoon, CHUNCHEON-SI (KR); Lim, Woo Hyeok, SEOUL (KR)
(74) Representative: GLAWE DELFS MOLL

(57) **Abstract**

A method for generating an advertising strategy, performed by a computing system is provided. The method may comprise receiving an advertising request query from an advertiser terminal, inputting the advertising request query into a generative artificial intelligence (AI) model and generating a first detailed query and a second detailed query to achieve the advertising request query, determining a first data source that stores data necessary to achieve the first detailed query and a second data source that stores data necessary to achieve the second detailed query, obtaining a first search result corresponding to the first detailed query from the first data source and a second search result corresponding to the second detailed query from the second data source, integrating the first and second search results and generating a final search result for the advertising request query and inputting the final search result into the generative AI model and generating an optimal advertising strategy for the advertising request query.

## Description

### CROSS-REFERENCE TO RELATED APPLICATION

This application claims priority from Korean Patent Application No. 10-2025-0018528 filed on February 13, 2025 in the Korean Intellectual Property Office, and all the benefits accruing therefrom under 35 U.S.C. 119, the contents of which in its entirety are herein incorporated by reference.

### BACKGROUND

### 1. Field

The present disclosure relates to a method and system for generating an advertising strategy, and more specifically, to a method and system for generating an advertising strategy that recommend an optimal advertising strategy in response to an advertising request query composed in natural language.

### 2. Description of the Related Art

Conventional advertising systems establish advertising strategies based on the results of manual data analysis when selecting various online or offline advertising media. Additionally, high-cost Digital Out-of-Home (DOOH) advertising products are structured in a way that makes them difficult for small and medium-sized advertisers to access. Furthermore, there are limitations in linking DOOH advertising with online advertising and measuring their effectiveness, making it challenging to achieve both advertising efficiency and cost-effectiveness at the same time.

Accordingly, there is a need for a technology capable of recommending an optimal advertising strategy in response to an advertiser's advertising request query composed in natural language.

### SUMMARY

An objective of the present disclosure is to provide a method and system for generating an advertising strategy that create an optimal advertising strategy in response to an advertising request query composed in natural language.

Another objective of the present disclosure is to provide a method and system for generating an advertising strategy that execute advertisements based on the generated optimal advertising strategy.

The objectives of the present disclosure are not limited to those mentioned above, and other objectives not explicitly stated will be clearly understood by those skilled in the art based on the following description.

According to an aspect of the present disclosure, there is provided a method for generating an advertising strategy, performed by a computing system. The method may comprise receiving an advertising request query from an advertiser terminal; inputting the advertising request query into a generative artificial intelligence (AI) model and generating a first detailed query and a second detailed query to achieve the advertising request query; determining a first data source that stores data necessary to achieve the first detailed query and a second data source that stores data necessary to achieve the second detailed query; obtaining a first search result corresponding to the first detailed query from the first data source and a second search result corresponding to the second detailed query from the second data source; integrating the first and second search results and generating a final search result for the advertising request query; and inputting the final search result into the generative AI model and generating an optimal advertising strategy for the advertising request query.

In some embodiments, the generating the first and second detailed queries may comprise extracting keywords from the advertising request query; and generating the first and second detailed queries using the extracted keywords.

In some embodiments, the determining the first and second data sources may comprise comparing the first and second detailed queries with indexes of respective data sources; and determining the first and second data sources based on a result of the comparison.

In some embodiments, the obtaining the first and second search results may comprise conducting searches for the first and second detailed queries in parallel on the first and second data sources, respectively.

In some embodiments, the generating the final search result may comprise filtering out duplicate data from the first and second search results.

In some embodiments, the filtering out duplicate data may comprise preprocessing the first and second search results by attribute; mapping the preprocessed first and second search results based on a common attribute; and merging the first and second search results if they have a same value for the common attribute.

In some embodiments, the generating the final search result may comprise computing a first importance score representing significance of the first search result based on a predefined first weight for the first data source; computing a second importance score representing significance of the second search result based on a predefined second weight for the second data source; and integrating the first and second search results based on the first and second importance scores.

According to another aspect of the present disclosure, there is provided a system for generating an advertising strategy. The system may comprise a communication interface; a memory in which a computer program is loaded; and at least one processor that executes the computer program, wherein the computer program includes instructions for executing operations of: receiving an advertising request query from an advertiser terminal; inputting the advertising request query into a generative artificial intelligence (AI) model and generating a first detailed query and a second detailed query to achieve the advertising request query; determining a first data source that stores data necessary to achieve the first detailed query and a second data source that stores data necessary to achieve the second detailed query; obtaining a first search result corresponding to the first detailed query from the first data source and a second search result corresponding to the second detailed query from the second data source; integrating the first and second search results and generating a final search result for the advertising request query; and inputting the final search result into the generative AI model and generating an optimal advertising strategy for the advertising request query.

In some embodiments, the operation of generating the first and second detailed queries may comprise extracting keywords from the advertising request query; and generating the first and second detailed queries using the extracted keywords.

In some embodiments, the operation of determining the first and second data sources may comprise comparing the first and second detailed queries with indexes of respective data sources; and determining the first and second data sources based on a result of the comparison.

In some embodiments, the operation of obtaining the first and second search results may comprise conducting searches for the first and second detailed queries in parallel on the first and second data sources, respectively.

In some embodiments, the operation of generating the final search result may comprise filtering out duplicate data from the first and second search results.

In some embodiments, the operation of filtering out duplicate data may comprise preprocessing the first and second search results by attribute; mapping the preprocessed first and second search results based on a common attribute; and merging the first and second search results if they have a same value for the common attribute.

In some embodiments, the operation of generating the final search result may comprise computing a first importance score representing significance of the first search result based on a predefined first weight for the first data source; computing a second importance score representing significance of the second search result based on a predefined second weight for the second data source; and integrating the first and second search results based on the first and second importance scores.

According to another aspect of the present disclosure, there is provided a computer-readable recording medium storing a computer program, the computer program being coupled with a computing device to execute operations of: receiving an advertising request query from an advertiser terminal; inputting the advertising request query into a generative artificial intelligence (AI) model and generating a first detailed query and a second detailed query to achieve the advertising request query; determining a first data source that stores data necessary to achieve the first detailed query and a second data source that stores data necessary to achieve the second detailed query; obtaining a first search result corresponding to the first detailed query from the first data source and a second search result corresponding to the second detailed query from the second data source; integrating the first and second search results and generating a final search result for the advertising request query; and inputting the final search result into the generative AI model and generating an optimal advertising strategy for the advertising request query.

### BRIEF DESCRIPTION OF THE DRAWINGS

The above and other aspects and features of the present disclosure will become more apparent by describing exemplary embodiments thereof in detail with reference to the attached drawings, in which:
FIG. 1 is a system configuration diagram illustrating the configuration and operation of an advertising system according to some embodiments of the present disclosure;
FIG. 2 is a flowchart illustrating the operation of an advertising strategy generation method according to some embodiments of the present disclosure;
FIG. 3 is a detailed flowchart illustrating specific operations of the method for generating an advertising strategy according to some embodiments of the present disclosure, explained with reference to FIG. 2;
FIG. 4 is a detailed flowchart illustrating specific operations of the method for generating an advertising strategy according to some embodiments of the present disclosure, explained with reference to FIG. 2;
FIG. 5 is a diagram illustrating the operation of the method for generating an advertising strategy according to some embodiments of the present disclosure;
FIG. 6 is a detailed flowchart illustrating specific operations of the method for generating an advertising strategy according to some embodiments of the present disclosure, explained with reference to FIG. 2;
FIG. 7 is a diagram illustrating a method for generating a final search result for an advertising request query according to some embodiments of the present disclosure;
FIG. 8 is a diagram illustrating a method for generating final search results for an advertising request query according to some embodiments of the present disclosure; and
FIG. 9 illustrates an exemplary computing device that can implement the systems according to some embodiments of the present disclosure.

### DETAILED DESCRIPTION

Hereinafter, preferred embodiments of the present disclosure will be described with reference to the attached drawings. Advantages and features of the present disclosure and methods of accomplishing the same may be understood more readily by reference to the following detailed description of preferred embodiments and the accompanying drawings. The present disclosure may, however, be embodied in many different forms and should not be construed as being limited to the embodiments set forth herein. Rather, these embodiments are provided so that this disclosure will be thorough and complete and will fully convey the concept of the disclosure to those skilled in the art, and the present disclosure will only be defined by the appended claims.

In adding reference numerals to the components of each drawing, it should be noted that the same reference numerals are assigned to the same components as much as possible even though they are shown in different drawings. In addition, in describing the present disclosure, when it is determined that the detailed description of the related well-known configuration or function may obscure the gist of the present disclosure, the detailed description thereof will be omitted.

Unless otherwise defined, all terms used in the present specification (including technical and scientific terms) may be used in a sense that can be commonly understood by those skilled in the art. In addition, the terms defined in the commonly used dictionaries are not ideally or excessively interpreted unless they are specifically defined clearly. The terminology used herein is for the purpose of describing particular embodiments only and is not intended to be limiting of the disclosure. In this specification, the singular also includes the plural unless specifically stated otherwise in the phrase.

In addition, in describing the component of this disclosure, terms, such as first, second, A, B, (a), (b), can be used. These terms are only for distinguishing the components from other components, and the nature or order of the components is not limited by the terms. If a component is described as being "connected," "coupled" or "contacted" to another component, that component may be directly connected to or contacted with that other component, but it should be understood that another component also may be "connected," "coupled" or "contacted" between each component.

Hereinafter, embodiments of the present disclosure will be described with reference to the attached drawings.

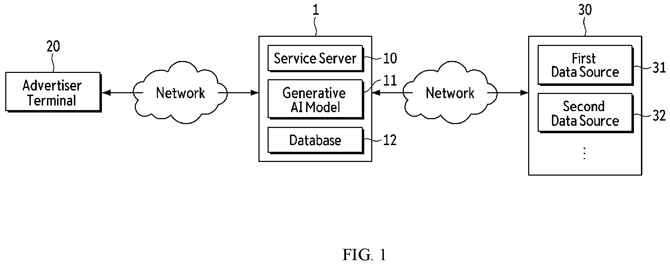

The configuration and operation of an advertising system according to some embodiments of the present disclosure will now be described with reference to FIG. 1. FIG. 1 is a system configuration diagram illustrating the configuration and operation of an advertising system according to some embodiments of the present disclosure.

Referring to FIG. 1, the advertising system may include a system 1 (hereinafter, the advertising strategy generation system 1) for generating an advertising strategy, an advertiser terminal 20, and data sources 30. The advertising strategy generation system 1 may include a service server 10, a generative AI model 11, and data sources 30, but the present disclosure is not limited thereto. In some embodiments, the advertising system may be designed to further include modules/devices/systems that are not illustrated in FIG. 1. Alternatively, the advertising system may be designed to exclude at least some of the components illustrated in FIG. 1, ranging from the advertising strategy generation system 1 to a second data source 32.

The advertiser terminal 20 may transmit an advertising request query composed in natural language to the advertising strategy generation system 1. The advertiser terminal 20, which is a terminal used by an advertiser, may receive an advertising request query from the advertiser.

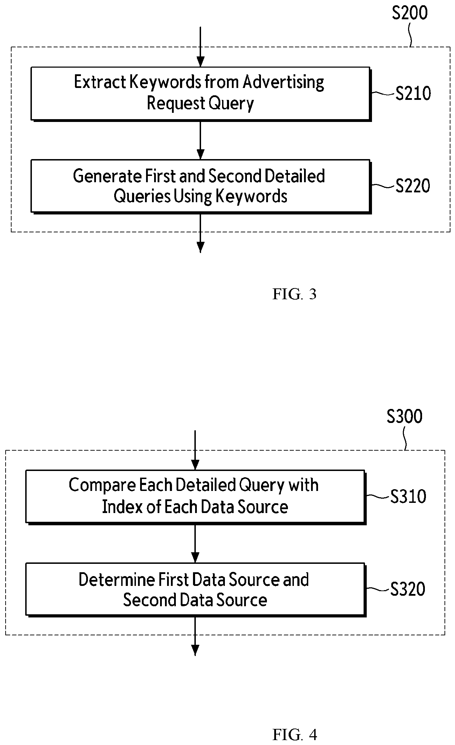

When the advertising strategy generation system 1 receives the advertising request query, the service server 10 may input the advertising request query into the generative AI model 11 and generate detailed queries to achieve the advertising request query. The generative AI model 11 may generate detailed queries using Chain of Thought (CoT) technology. CoT technology enables the generative AI model 11 to explicitly present logical reasoning steps when solving a complex problem, rather than simply deriving results, allowing the generative AI model 11 to show intermediate reasoning processes. CoT technology is already well known in the art to which the present disclosure pertains, and thus, a detailed explanation thereof will be omitted. A further detailed explanation of how to generate detailed queries will be provided later with reference to FIG. 3.

The generative AI model 11 is an artificial intelligence model that generates an advertising strategy based on the advertising request query. By leveraging large-scale data learning and deep learning technology, the generative AI model 11 can understand the advertiser's requirements and generate new outputs. Examples of the generative AI model 11 include text generation models such as Generative Pre-trained Transformer (GPT) and Bidirectional Encoder Representations from Transformers (BERT). The generative AI model 11 is already well known in the art to which the present disclosure pertains, and thus, a further detailed explanation thereof will be omitted.

The service server 10 may determine the data sources 30 that store data necessary to achieve a plurality of generated detailed queries. The data sources 30 may be databases storing different types of data. For example, a first data source 31 may be a database storing demographic data, and a second data source 32 may be a database storing sales data of individual stores. The data sources 30 may include databases that store a variety of data, including the first and second data sources 31 and 32. A further detailed explanation of the data sources 30 will be provided later with reference to FIG. 4.

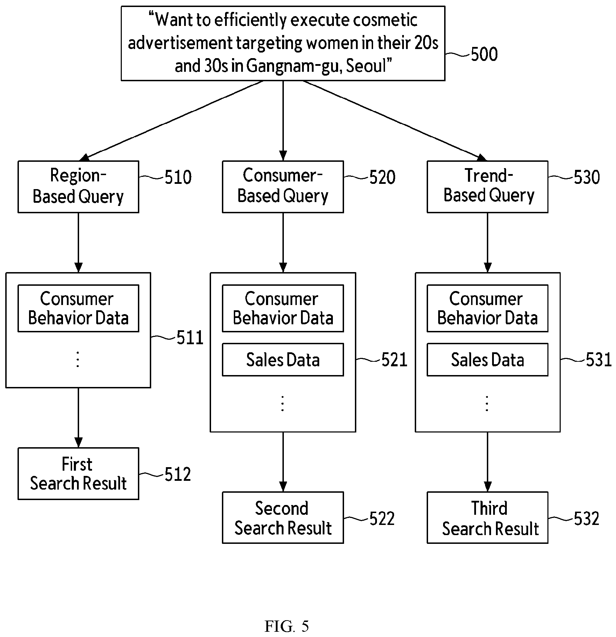

The service server 10 may perform searches for the detailed queries on the data sources 30 and obtain search results corresponding to the detailed queries. That is, the service server 10 may obtain appropriate search results for the detailed queries from the respective data sources 30. A further detailed explanation of how to retrieve search results for detailed queries will be provided later with reference to FIG. 5.

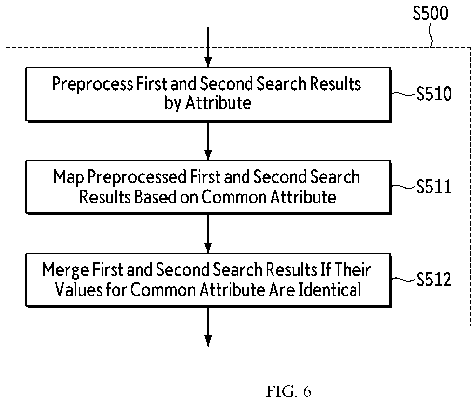

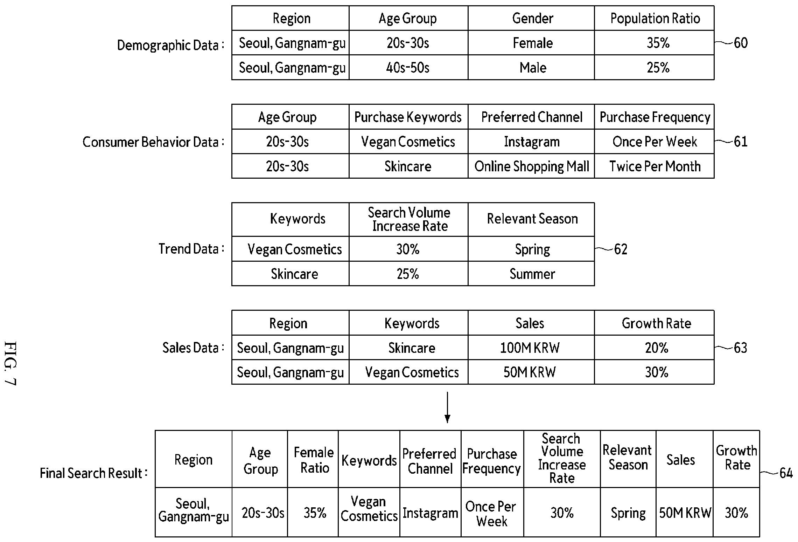

Thereafter, the service server 10 may generate a final search result for the advertising request query by integrating the search results. A further detailed explanation will be provided later with reference to FIGS. 6 and 7.

The service server 10 may generate an optimal advertising strategy for the advertising request query by inputting the final search result into the generative AI model 11. The generative AI model 11 may summarize the generated final search result in a user-friendly manner, generate an advertising execution strategy and a related report, and transmit them to the advertiser terminal 20 and an advertising execution system (not illustrated).

A database 12 may be an internal device of the advertising strategy generation system 1 that stores various data generated in the process of creating an advertising strategy, such as the advertising request query received from the advertiser terminal 20 and optimal advertising strategy data for the advertising request query.

Each of the components of the advertising strategy generation system 1, including the service server 10, the generative AI model 11, and the database 12, may be implemented as at least one computing device. For example, all functions of the advertising strategy generation system 1 may be implemented in a single computing device. In another example, a first function of the advertising strategy generation system 1 may be implemented in a first computing device while a second function of the advertising strategy generation system 1 may be implemented in a second computing device. In yet another example, a specific function of the advertising strategy generation system 1 may be implemented across multiple computing devices.

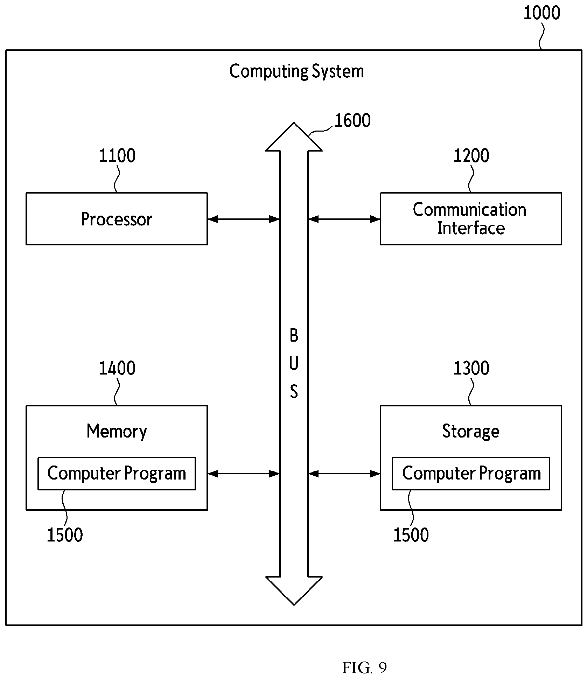

A "computing device" may include any device equipped with computing functionality. An exemplary computing device is as illustrated in FIG. 9. Since a computing device is an aggregate of various components such as memory and processors that interact with one another, it may also be referred to as a "computing system." The term "computing system" may also encompass the concept of an aggregate in which multiple computing devices interact with one another.

In some embodiments, the components of the event search system, ranging from the advertising strategy generation system 1 to the data sources 30, may communicate via a network. The network may be implemented as any type of wired or wireless network, such as a Local Area Network (LAN), a Wide Area Network (WAN), a mobile radio communication network, or Wireless Broadband Internet (WiBro).

For convenience, the following description assumes that all steps/operations of methods to be described later are performed by the service server 10. Accordingly, if the entity performing a specific step/operation is omitted, the specific step/operation may be understood as being performed by the service server 10. However, in an actual environment, some steps/operations of the methods to be described later may be performed by other computing devices.

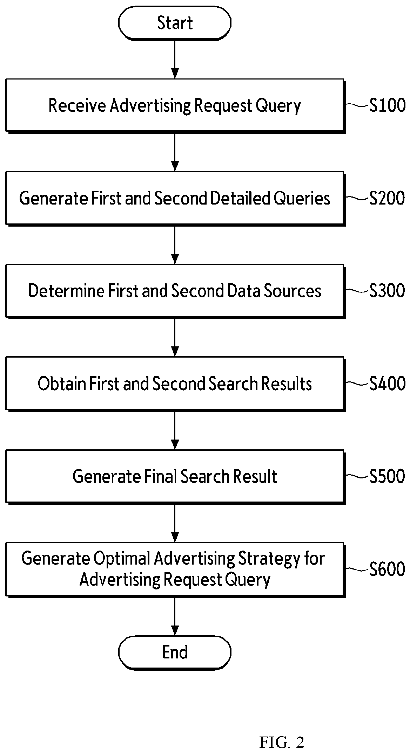

A method for generating an advertising strategy according to some embodiments of the present disclosure will now be described with reference to FIG. 2. FIG. 2 is a flowchart illustrating the operation of the method for generating an advertising strategy according to some embodiments of the present disclosure.

Referring to FIG. 2, the service server 10 may receive an advertising request query from the advertiser terminal 20 (S100). The advertising request query may be an advertising request expressed in natural language. For example, the advertising request query may be, *"Want to efficiently execute a cosmetic advertisement targeting women in their 20s and 30s in Gangnam-gu, Seoul,"* but the present disclosure is not limited thereto.

Thereafter, the service server 10 may input the advertising request query into the generative AI model 11 and generate a first detailed query and a second detailed query using CoT technology for the advertising request query (S200).

A method for generating detailed queries according to some embodiments of the present disclosure will now be described with reference to FIG. 3. FIG. 3 is a detailed flowchart illustrating specific operations of the method for generating an advertising strategy generation according to some embodiments of the present disclosure, described with reference to FIG. 2.

Referring to FIG. 3, the service server 10 may extract keywords from the advertising request query (S210). For example, if the advertising request query is *"Want to efficiently execute a cosmetic advertisement targeting women in their 20s and 30s in Gangnam-gu, Seoul,"* the extracted keywords may include "Gangnam-gu, Seoul," "women in their 20s and 30s," "cosmetic advertisement," and "advertising efficiency."

Thereafter, the service server 10 may generate first and second detailed queries by inputting the extracted keywords into the generative AI model 11 (S210). For example, the generative AI model 11 may generate a region-based query, "Ratio of women in their 20s and 30s in Gangnam-gu, Seoul," based on first keywords, "Gangnam-gu, Seoul" and "women in their 20s and 30s." The generative AI model 11 may generate a consumer-based query, "Consumer behavior patterns in Gangnam-gu," based on a second keyword, "cosmetic advertisement." The generative AI model 11 may generate a trend-based query based on a third keyword, "advertising efficiency." The trend-based query may include queries related to commercial districts, cosmetic purchasing trends, and effective advertising media.

Referring back to FIG. 2, when the first and second detailed queries are generated (S200), the service server 10 may determine a first data source 31 that stores data necessary to achieve the first detailed query and a second data source 32 that stores data necessary to achieve the second detailed query (S300). The first and second data sources 31 and 32 may be databases storing different types of data.

A method for determining data sources according to some embodiments of the present disclosure will now be described with reference to FIG. 4. FIG. 4 is a detailed flowchart illustrating specific operations of the method for generating an advertising strategy according to some embodiments of the present disclosure, described with reference to FIG. 2.

Referring to FIG. 4, the service server 10 may compare the first and second detailed queries with the indexes of the first and second data sources 31 and 32 (S310). The indexes of the first and second data sources 31 and 32 represent the characteristics of the first and second data sources 31 and 32. For example, for a region-based query, a search may be performed on a data source that stores region-related data.

Based on the results of the comparison, the service server 10 may determine the first and second data sources 31 and 32 (S320). For example, a region-based query containing the keyword "Gangnam-gu, Seoul" may be determined to be searched in a data source storing region-related data. A consumer-based query containing the keyword "women in their 20s and 30s" may be determined to be searched in a data source storing demographic data. A trend-based query containing the keyword "cosmetic" may be determined to be searched in a data source storing consumer behavior and sales data.

Referring back to FIG. 2, the service server 10 may obtain a first search result corresponding to the first detailed query from the first data source 31 and a second search result corresponding to the second detailed query from the second data source 32 (S400). The service server 10 may conduct a search for the first detailed query on the first data source 31 and obtain the first search result as a result of the search. The service server 10 may also conduct a search for the second detailed query on the second data source 32 and obtain the second search result as a result of the search.

A method for generating an advertising strategy according to some embodiments of the present disclosure will now be described with reference to FIG. 5. FIG. 5 is a diagram illustrating the operation of the method for generating an advertising strategy according to some embodiments of the present disclosure.

Referring to FIG. 5, it is assumed that an advertising request query 500 received from the advertiser terminal 20 is *"Want to efficiently execute a cosmetic advertisement targeting women in their 20s and 30s in Gangnam-gu, Seoul."*

The service server 10 may input the advertising request query 500 into the generative AI model 11 and generate a region-based first detailed query 510, a consumer-based second detailed query 520, and a trend-based third detailed query 530 to achieve the advertising request query 500.

The first detailed query 510 may be, for example, a regional data-related query, such as "Population distribution in Gangnam-gu, Seoul." The second detailed query 520 may be, for example, a consumer data-based query, such as "Consumer purchasing patterns for cosmetics in Gangnam-gu, Seoul, and sales trends of cosmetic products." The third detailed query 530 may be, for example, a trend data-related query, such as "Latest search keywords related to cosmetics and cosmetic purchase channels."

The service server 10 may determine a first data source 511 that stores data necessary to achieve the first detailed query 510. The first data source 511 may be a data source storing demographic data necessary to achieve the region-based first detailed query 510.

The service server 10 may determine a second data source 521 that stores data necessary to achieve the second detailed query 520. The second data source 521 may be a data source storing consumer behavior and sales data necessary to achieve the region-based second detailed query 520. The consumer behavior data may include information on purchasing patterns, and consumers' preferred media and brands.

The service server 10 may determine a third data source 531 that stores data necessary to achieve the third detailed query 530. The third data source 531 may be a data source storing commercial district data and trend data necessary to achieve the trend-based third detailed query 530. The commercial district data may include information on the locations of major commercial areas and foot traffic. The trend data may include information on latest search keywords and seasonally popular products.

The service server 10 may conduct a search for the first detailed query 510 on the first data source 511 and obtain the first search result. For example, the service server 10 may search for the population ratio in Gangnam-gu, Seoul, from the first data source 511 and obtain the age-specific population ratio of Gangnam-gu as a search result.

The service server 10 may conduct a search for the second detailed query 520 on the second data source 521 and obtain the second search result. For example, the service server 10 may search for purchasing patterns of cosmetics in Gangnam-gu, Seoul, from the second data source 521 and obtain the age-specific cosmetic purchasing patterns of Gangnam-gu as a search result.

The service server 10 may conduct a search for the third detailed query 530 on the third data source 531 and obtain the third search result. For example, the service server 10 may search for the latest search keywords related to cosmetics in Gangnam-gu, Seoul, from the third data source 531 and obtain the latest cosmetic-related search keywords as a search result.

In one embodiment, the service server 10 may conduct a search for the first detailed query on the first data source 511 and a search for the second detailed query from the second data source 521. That is, the service server 10 may conduct searches for the first and second detailed queries in parallel on the first and second data sources 511 and 521.

According to the present embodiment, by processing queries on multiple data sources simultaneously, search speed can be increased, and overall process efficiency can be maximized. Therefore, resource consumption, such as time and cost, can be reduced.

Referring back to FIG. 2, when the first and second search results are obtained (S400), the service server 10 may integrate the first and second search results and generate a final search result for the advertising request query (S500). The service server 10 may filter out duplicate data from the first and second search results. By merging the first and second search results based on the filtered-out duplicate data, the service server 10 may derive the final search result.

A method for generating a final search result according to some embodiments of the present disclosure will now be described with reference to FIG. 6. FIG. 6 is a detailed flowchart illustrating specific operations of the method for generating an advertising strategy according to some embodiments of the present disclosure, described with reference to FIG. 2.

Referring to FIG. 6, the service server 10 may preprocess the first and second search results based on attributes (S510). For example, the service server 10 may preprocess the first and second search results into data in which the first and second search results are structured by attribute according to a predefined table format.

Thereafter, the service server 10 may match the preprocessed first and second search results based on their common attribute (S511).

If the preprocessed first and second search results have the same value for the common attribute, the service server 10 may merge the first and second search results (S512).

The method of FIG. 6 will now be further explained with reference to FIG. 7. FIG. 7 is a diagram illustrating a method for generating a final search result for an advertising request query according to some embodiments of the present disclosure.

Referring to FIG. 7, a preprocessed first search result 60, a preprocessed second search result 61, a preprocessed third search result 62, and a preprocessed fourth search result 63 are illustrated. The first search result 60, which corresponds to demographic data, may include attributes such as region, age group, gender, and population ratio. The second search result 61, which corresponds to consumer behavior data, may include attributes such as age group, purchase keyword, preferred channel, and purchase frequency. The third search result 62, which corresponds to trend data, may include attributes such as keyword, search volume increase rate, and relevant season. The fourth search result 63, which corresponds to sales data, may include attributes such as region, keyword, sales, and growth rate.

The service server 10 may map the first, second, third, and fourth search results 60, 61, 62, and 63 based on their common attribute. Specifically, the service server 10 may map the first and second search results 60 and 61 based on their common attribute, that is, age group. The service server 10 may map the second and third search results 61 and 62 based on their common attribute, i.e., purchase keyword. The service server 10 may map the second and fourth search results 61 and 63 based on their common attribute, i.e., keyword (or category). The service server 10 may map the third and fourth search results 62 and 63 based on their common attribute, i.e., keyword (or category). The service server 10 may map the first and fourth search results 60 and 63 based on their common attribute, i.e., region.

If the first, second, third, and fourth search results 60, 61, 62, and 63 have the same value for their common attribute, the service server 10 may merge the first, second, third, and fourth search results 60, 61, 62, and 63. The final search result 64 may include information such as region being Gangnam-gu, Seoul, age group being 20s to 30s, female ratio being 35%, keyword being "vegan cosmetics," preferred channel being Instagram, purchase frequency being once per week, search volume increase rate being 30%, relevant season being spring, sales being 50 million KRW, and growth rate being 30%. In other words, a specific advertising strategy derived from the advertising request query 500 (i.e., *"Want to efficiently execute a cosmetic advertisement targeting women in their 20s and 30s in Gangnam-gu, Seoul*") received from the advertiser terminal 20 may be to run an Instagram advertisement campaign for vegan cosmetics targeting women in their 20s and 30s in Gangnam-gu, Seoul, during the spring.

According to the present embodiment, a specific advertising strategy can be generated based on the advertising request query 500 received from the advertiser terminal 20. Consequently, by generating an optimal advertising strategy according to the details of the specific advertising strategy, advertising effectiveness can be maximized.

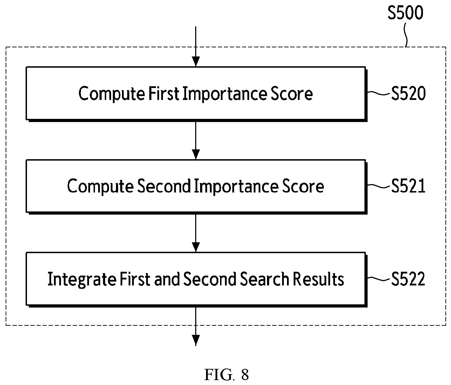

A method for generating a final search result according to some embodiments of the present disclosure will now be described with reference to FIG. 8. FIG. 8 is a detailed flowchart illustrating specific operations of the method for generating an advertising strategy according to some embodiments of the present disclosure, described with reference to FIG. 2.

Referring to FIG. 8, the service server 10 may compute a first importance score representing the significance of the first search result based on a predefined first weight for the first data source 31 (S520). The service server 10 may compute a second importance score representing the significance of the second search result based on a predefined second weight for the second data source 32 (S521).

The first and second weights may be values set by the user for the respective data sources. The first and second weights may vary depending on the recency of data (i.e., how up-to-date the information used is since the time of search result acquisition), the relevance to the region identified in the advertising request query 500 received from the advertiser terminal 20, and the reliability of each data source.

Thereafter, the service server 10 may integrate the first and second search results based on the first and second importance scores. For example, if the first importance score is above a threshold while the second importance score is below the threshold, the service server 10 may include the first search result in the final search result while excluding the second search result. As another example, the service server 10 may normalize the first and second importance scores into percentile values, determine the integration ratio for the first and second search results based on the calculated percentile values, and integrate the first and second search results according to the determined integration ratio.

However, the present disclosure is not limited to this example, and the method for integrating the first and second search results based on the first and second importance scores may vary depending on the circumstances.

According to the present embodiment, by adjusting the significance of search results obtained from the respective data sources 30 and generating a final search result accordingly, the effectiveness of the advertising strategy generated based on the final search result can be maximized.

Referring back to FIG. 2, when the final search result for the advertising request query received from the advertiser terminal 20 is generated (S500), the service server 10 may input the final search result into the generative AI model 11 and generate an optimal advertising strategy for the advertising request query (S600). The generative AI model 11 may summarize the generated final search result in a user-friendly manner, create an advertising execution strategy and a related report, and transmit the advertising execution strategy and related report to the advertiser terminal 20 and the advertising execution system (not illustrated).

The service server 10 may transmit the generated advertising strategy to the advertising execution system. The advertising execution system may automatically generate an advertising schedule that allows the execution of advertising content provided by the advertiser terminal 20 based on the generated advertising strategy. The advertising execution system may then automatically execute the advertising content according to the generated advertising schedule. Specifically, when the advertising execution system transmits the advertising content to an advertising media device (e.g., an outdoor billboard), the advertising media device may display the advertising content according to the advertising schedule.

For example, the service server 10 may input the final search result into the generative AI model 11 and generate a first advertising strategy. The first advertising strategy may be as follows, but the present disclosure is not limited thereto:
"Advertising Region: Gangnam Station, located in Gangnam-gu, Seoul
Advertising Media: Outdoor billboard (e.g., digital signage inside subway stations), online advertising (e.g., advertising via social media platforms)
Advertising Time Slot: Weekdays - Commuting hours, Weekends - Shopping peak hours
Advertising Budget Allocation: Outdoor advertising 60%, online advertising 40%."

The service server 10 may transmit the first advertising strategy to the advertising execution system. The advertising execution system may automatically generate a first advertising schedule for executing the advertising content provided by the advertiser terminal 20 based on the first advertising strategy.

Thereafter, the advertising execution system may automatically execute the advertising content according to the first advertising schedule. Specifically, when the advertising execution system transmits the advertising content provided by the advertiser terminal 20 to an advertising media device such as an outdoor billboard or an online advertising platform, the advertising media device may display the advertising content according to the first advertising schedule.

According to the present embodiment, even if the advertiser does not specify detailed advertising requirements, an advertising strategy tailored to the advertiser's needs can be generated using minimal information provided by the advertiser. That is, an optimal advertising strategy can be generated in response to an advertising request query composed in natural language. Therefore, advertiser experience when using the advertising strategy generation system 1 can be enhanced.

Additionally, according to the present embodiment, advertisements can be automatically executed based on the generated optimal advertising strategy. Thus, since an advertising strategy is generated automatically and advertisements are executed according to the generated advertising strategy, advertiser convenience can be improved, and advertising effectiveness can be maximized.

FIG. 9 is a hardware configuration diagram of a computing device according to some embodiments of the present disclosure. Referring to FIG. 9, a computing device 1000 may include at least one processor 1100, a system bus 1600, a communication interface 1200, a memory 1400 that loads a computer program 1500 to be executed by the processor 1100, and a storage 1300 that stores the computer program 1500.

The computing device 1000 in FIG. 9 may represent, for example, the hardware structure of one or more computing devices that form the service server 10 described with reference to FIG. 1.

The processor 1100 controls the overall operation of each component of the computing device 1000. The processor 1100 may perform computations related to at least one application or program that executes methods/operations according to various embodiments of the present disclosure. The memory 1400 stores various data, commands, and/or information. The memory 1400 may load at least one computer program 1500 from the storage 1300 to execute the methods/operations according to various embodiments of the present disclosure. The storage 1300 may non-transiently store at least one computer program 1500.

The computer program 1500 may include one or more instructions implementing the methods/operations according to various embodiments of the present disclosure. When the computer program 1500 is loaded into the memory 1400, the processor 1100 may execute the instructions to perform the methods/operations according to various embodiments of the present disclosure.

In one embodiment, the computer program 1500 may include instructions for executing the operations of: receiving an advertising request query from an advertiser terminal; inputting the advertising request query into a generative AI model and generating a first detailed query and a second detailed query to fulfill the advertising request query; determining a first data source that stores data necessary to achieve the first detailed query and a second data source that stores data necessary to achieve the second detailed query; obtaining a first search result corresponding to the first detailed query from the first data source and a second search result corresponding to the second detailed query from the second data source; integrating the first and second search results and generating a final search result for the advertising request query; and inputting the final search result into the generative AI model and generating an optimal advertising strategy for the advertising request query.

So far, a variety of embodiments of the present disclosure and the effects according to embodiments thereof have been mentioned with reference to FIGS. 1 to 11. The effects according to the technical idea of the present disclosure are not limited to the forementioned effects, and other unmentioned effects may be clearly understood by those skilled in the art from the description of the specification.

The technical features of the present disclosure described so far may be embodied as computer readable codes on a computer readable medium. The computer readable medium may be, for example, a removable recording medium (CD, DVD, Blu-ray disc, USB storage device, removable hard disk) or a fixed recording medium (ROM, RAM, computer equipped hard disk). The computer program recorded on the computer readable medium may be transmitted to other computing device via a network such as internet and installed in the other computing device, thereby being used in the other computing device.

Although operations are shown in a specific order in the drawings, it should not be understood that desired results can be obtained when the operations must be performed in the specific order or sequential order or when all of the operations must be performed. In certain situations, multitasking and parallel processing may be advantageous. According to the above-described embodiments, it should not be understood that the separation of various configurations is necessarily required, and it should be understood that the described program components and systems may generally be integrated together into a single software product or be packaged into multiple software products.

In concluding the detailed description, those skilled in the art will appreciate that many variations and modifications can be made to the preferred embodiments without substantially departing from the principles of the present disclosure. Therefore, the disclosed preferred embodiments of the disclosure are used in a generic and descriptive sense only and not for purposes of limitation.

## Claims

1. A method for generating an advertising strategy, performed by a computing system, the method comprising:
receiving an advertising request query from an advertiser terminal;
inputting the advertising request query into a generative artificial intelligence (AI) model and generating a first detailed query and a second detailed query to achieve the advertising request query;
determining a first data source that stores data necessary to achieve the first detailed query and a second data source that stores data necessary to achieve the second detailed query;
obtaining a first search result corresponding to the first detailed query from the first data source and a second search result corresponding to the second detailed query from the second data source;
integrating the first and second search results and generating a final search result for the advertising request query; and
inputting the final search result into the generative AI model and generating an optimal advertising strategy for the advertising request query.

2. The method of claim 1, wherein the generating the first and second detailed queries comprises: extracting keywords from the advertising request query; and generating the first and second detailed queries using the extracted keywords.

3. The method of claim 1, wherein the determining the first and second data sources comprises: comparing the first and second detailed queries with indexes of respective data sources; and determining the first and second data sources based on a result of the comparison.

4. The method of claim 1, wherein the obtaining the first and second search results comprises: conducting searches for the first and second detailed queries in parallel on the first and second data sources, respectively.

5. The method of claim 1, wherein the generating the final search result comprises filtering out duplicate data from the first and second search results.

6. The method of claim 5, wherein the filtering out duplicate data comprises: preprocessing the first and second search results by attribute; mapping the preprocessed first and second search results based on a common attribute; and merging the first and second search results if they have a same value for the common attribute.

7. The method of claim 1, wherein the generating the final search result comprises: computing a first importance score representing significance of the first search result based on a predefined first weight for the first data source; computing a second importance score representing significance of the second search result based on a predefined second weight for the second data source; and integrating the first and second search results based on the first and second importance scores.

8. A system for generating an advertising strategy, comprising:
a communication interface;
a memory in which a computer program is loaded; and
at least one processor that executes the computer program,
wherein the computer program includes instructions for executing operations of: receiving an advertising request query from an advertiser terminal; inputting the advertising request query into a generative artificial intelligence (AI) model and generating a first detailed query and a second detailed query to achieve the advertising request query; determining a first data source that stores data necessary to achieve the first detailed query and a second data source that stores data necessary to achieve the second detailed query; obtaining a first search result corresponding to the first detailed query from the first data source and a second search result corresponding to the second detailed query from the second data source; integrating the first and second search results and generating a final search result for the advertising request query; and inputting the final search result into the generative AI model and generating an optimal advertising strategy for the advertising request query.

9. The system of claim 8, wherein the operation of generating the first and second detailed queries comprises: extracting keywords from the advertising request query; and generating the first and second detailed queries using the extracted keywords.

10. The system of claim 8, wherein the operation of determining the first and second data sources comprises: comparing the first and second detailed queries with indexes of respective data sources; and determining the first and second data sources based on a result of the comparison.

11. The system of claim 8, wherein the operation of obtaining the first and second search results comprises conducting searches for the first and second detailed queries in parallel on the first and second data sources, respectively.

12. The system of claim 8, wherein the operation of generating the final search result comprises filtering out duplicate data from the first and second search results.

13. The system of claim 12, wherein the operation of filtering out duplicate data comprises: preprocessing the first and second search results by attribute; mapping the preprocessed first and second search results based on a common attribute; and merging the first and second search results if they have a same value for the common attribute.

14. The system of claim 8, wherein the operation of generating the final search result comprises: computing a first importance score representing significance of the first search result based on a predefined first weight for the first data source; computing a second importance score representing significance of the second search result based on a predefined second weight for the second data source; and integrating the first and second search results based on the first and second importance scores.

15. A computer-readable recording medium storing a computer program, the computer program being coupled with a computing device to execute operations of:
receiving an advertising request query from an advertiser terminal;
inputting the advertising request query into a generative artificial intelligence (AI) model and generating a first detailed query and a second detailed query to achieve the advertising request query;
determining a first data source that stores data necessary to achieve the first detailed query and a second data source that stores data necessary to achieve the second detailed query;
obtaining a first search result corresponding to the first detailed query from the first data source and a second search result corresponding to the second detailed query from the second data source;
integrating the first and second search results and generating a final search result for the advertising request query; and
inputting the final search result into the generative AI model and generating an optimal advertising strategy for the advertising request query.
